# EUROPEAN PATENT SPECIFICATION

(11) **EP 4 570 079 B1**
(45) Date of publication and mention of the grant of the patent: **02.12.2026**
(21) Application number: 25173195.6
(22) Date of filing: 20.12.2019
(51) Int. Cl.: A23K 20/163, A23K 40/00

(54) **PET FOODS COMPRISING GRAVY TOPPING COMPRISING METHYLCELLULOSE AND METHODS OF MAKING SUCH PET FOODS**
HAUSTIERFUTTER MIT EINER SAVY-TOPPING MIT METHYLCELLULOSE UND VERFAHREN ZUR HERSTELLUNG SOLCHER HAUSTIERFUTTER
ALIMENTS POUR ANIMAUX DOMESTIQUES COMPRENANT UN NAPPAGE DE SAUCE COMPRENANT DE LA MÉTHYLCELLULOSE ET PROCÉDÉS DE FABRICATION DE TELS ALIMENTS POUR ANIMAUX DOMESTIQUES

(30) Priority: 24.12.2018 US 201862784610 P
(43) Date of publication of application: 18.06.2025
(62) Document number(s) of the earlier application(s) in accordance with Art. 76 EPC: 19839154.2 / 3 902 407
(73) Proprietor: Société des Produits Nestlé S.A., 1800 Vevey (CH)
(72) Inventor: ROUANET, Laurent, Villers-Bretonneux (FR); WATELAIN, Annie, Lavieville (FR); ROIG, Francisco, Amiens (FR); DESSAUVAGE, Julien, Lille (FR)
(74) Representative: Elkington and Fife LLP

(56) References cited:
- WO-A2-02/00036
- CN-A- 106 490 316
- US-A1- 2007 264 415

## Description

### CROSS REFERENCE TO RELATED APPLICATIONS

This application claims priority to U.S. Provisional Application Serial No. 62/784,610 filed December 24, 2018.

### FIELD

Provided herein is a system for preparing multi-layered pet food according to claims 1 to 15.

### BACKGROUND

There are many pet food products on the market. The pet food products can be in a variety of shapes and structures such as kibbles, biscuits, rawhide products and meat emulsion products. Typically, these pet food products are homogenous in that they are usually made from the same materials throughout the product. Even pet food products that appear to be made from different materials are usually made by providing the same base materials with different colors to give the pet food products a multi-component appearance.

Multi-layered pet food products are very attractive for consumers but challenging for manufacturers. For example, in the pet food industry it is difficult to obtain a substantially flat top in a retorted product containing mousse or meat emulsion with a gravy topping, or chunk in jelly and a gravy topping.

Thus, there is a need in the industry for pet food products that have new and interesting textures and appearances to further stimulate consumer interest.

### SUMMARY

The present disclosure describes a method of making a multi-layered pet food comprising preparing a first edible composition that is a gravy comprising from about 0.1 weight % to about 5.0 weight % methylcellulose, at a first temperature, wherein the first temperature is from about 10°C to about 26°C; filling a first layer comprising gravy into a container; heating the container comprising the gravy to a second temperature to jellify the gravy; filling a second layer comprising a second edible composition into the container and on top of the first layer, wherein the first layer and the second layer are discrete layers.

Also described are multi-layered pet foods comprising a first edible composition that is a gravy comprising about 0.1 weight % to about 5.0 weight % methylcellulose and about 0.1 weight % to about 5.0 weight % guar; and a second edible composition, wherein the first edible composition and the second edible composition are discrete layers.

The present disclosure is directed to a system for preparing a multi-layered pet food comprising a container loading station, a first filler for dispensing a first layer comprising a first edible composition into the container, a heating unit comprising a heat source; a second filler for dispensing a second layer comprising a second edible composition into the container and on top of the first layer; a lid setting station; and a weighing station for weighing the container comprising the first layer and the second layer.

Additional features and advantages are described herein, and will be apparent from the following Detailed Description and the Figures.

### BRIEF DESCRIPTION OF THE FIGURES

FIG. 1 is a graph of gravy viscosity vs. temperature for different gravy compositions according to the present disclosure in Example 1.
FIG. 2 is a representative rheogram for gravy compositions comprising different amounts of methylcellulose and guar gum as describe in Example 2 herein.
FIG. 3 is a representative rheogram of the gravy and meat emulsion during the different process phases, filling of gravy into the container, gravy jellification then the cooking of the gravy and meat emulsion.
FIG. 4 depicts the jellification behavior for different gravy compositions described in Example 4 herein.
FIG. 5 is representative photographs of products from a metal can, the products comprising gravy toppings at different viscosities without methylcellulose on a base layer of meat emulsion, described in Example 5 herein.
FIG. 6 is representative photographs of products from plastic tubs, the products comprising toppings of gravies with methylcellulose on a base layer of meat/mousse, described in Example 6 herein.
FIG. 7 is representative photographs of products from a plastic tub (left) and a metal can (middle, right) comprising a topping of gravy comprising methylcellulose on a base layer of meat, described in Example 7 herein.

### DETAILED DESCRIPTION

### Definitions

Some definitions are provided hereafter. Nevertheless, definitions may be located in the "Embodiments" section below, and the above header "Definitions" does not mean that such disclosures in the "Embodiments" section are not definitions.

As used in this disclosure and the appended claims, the singular forms "a," "an" and "the" include plural referents unless the context clearly dictates otherwise. Thus, for example, reference to "a meat" includes two or more meats.

The term "and/or" used in the context of "X and/or Y" should be interpreted as "X," or "Y," or "both X and Y." Similarly, "at least one of X or Y" should be interpreted as "X," or "Y," or "both X and Y." Where used herein, the terms "example" and "such as," particularly when followed by a listing of terms, are merely exemplary and illustrative and should not be deemed to be exclusive or comprehensive. Any embodiment disclosed herein can be combined with any other embodiment disclosed herein unless explicitly stated otherwise.

The words "comprise," "comprises" and "comprising" are to be interpreted inclusively rather than exclusively. Likewise, the terms "include," "including" and "or" should all be construed to be inclusive, unless such a construction is clearly prohibited from the context.

However, the compositions disclosed herein may lack any element that is not specifically disclosed. Thus, a disclosure of an embodiment using the term "comprising" includes a disclosure of embodiments "consisting essentially of" and "consisting of" the components identified. Similarly, the methods disclosed herein may lack any step that is not specifically disclosed herein. Thus, a disclosure of an embodiment using the term "comprising" includes a disclosure of embodiments "consisting essentially of" and "consisting of" the steps identified. "Consisting essentially of" means that the embodiment comprises more than 50 wt.% of the identified components, preferably at least 75 wt.% of the identified components, more preferably at least 85 wt.% of the identified components, most preferably at least 95 wt.% of the identified components, for example at least 99 wt.% of the identified components.

As used herein, "about," "approximately" and "substantially" are understood to refer to numbers in a range of numerals, for example the range of -10% to +10% of the referenced number, within -5% to +5% of the referenced number, within -1% to +1% of the referenced number, or within -0.1% to +0.1% of the referenced number. Furthermore, all numerical ranges herein should be understood to include all integers, whole or fractions, within the range. Moreover, these numerical ranges should be construed as providing support for a claim directed to any number or subset of numbers in that range. For example, a disclosure of from 1 to 10 should be construed as supporting a range of from 1 to 8, from 3 to 7, from 1 to 9, from 3.6 to 4.6, from 3.5 to 9.9, and so forth.

All percentages expressed herein are by weight of the total weight of the composition unless expressed otherwise. When reference is made to the pH, values correspond to pH measured at 25 °C with standard equipment.

The term "pet" means any animal that could benefit from or enjoy the compositions provided by the present disclosure. For example, the pet can be an avian, bovine, canine, equine, feline, hircine, lupine, murine, ovine, or porcine animal, but the pet can be any suitable animal. The term "companion animal" means a dog or a cat.

The terms "food," "food product" and "food composition" mean a product or composition that is intended for ingestion by an animal, including a human, and provides at least one nutrient to the animal. The term "pet food" means any food composition intended to be consumed by a pet. "Dry food" is pet food having a water activity less than 0.75. "Semi-moist food" and "intermediate moisture food" is pet food having a water activity from 0.75 to 0.85. "Wet food" is pet food having a water activity more than 0.85. As used herein, a "multi-layered" pet food has a plurality of distinct layers which have different textures relative to each other and preferably have at least one different visual characteristic relative to each other such that a boundary between the layers is visible, and the distinct layers of the pet food do not mix into each other in at least ambient conditions, i.e., a temperature between 15°C and 25°C and a pressure about 100 kPa.

Unless defined otherwise, all technical and scientific terms, terms of art, and acronyms used herein have the meanings commonly understood by one of ordinary skill in the art in the field(s) of the present disclosure or in the field(s) where the term is used. Although any compositions, methods, articles of manufacture, or other means or materials similar or equivalent to those described herein can be used, the preferred devices, methods, articles of manufacture, or other means or materials are described herein.

### Embodiments

Described herein are multi-layered pet food compositions and methods of making multi-layered pet foods, as set forth in detail below.

Herein described is a method of making a multi-layered pet food, the method comprising preparing a first edible composition, that is a gravy comprising from about 0.1 weight % to about 5.0 weight % methylcellulose, at a first temperature, wherein the first temperature is from about 10°C to about 26°C; filling a first layer comprising the gravy into a container; heating the container comprising the gravy to a second temperature to jellify the gravy; filling a second layer comprising a second edible composition into the container and on top of the first layer, wherein the first layer and the second layer are discrete layers.

In some embodiments of the method, the gravy comprises methylcellulose in an amount from about 0.1 weight % to about 5.0 weight %. In another embodiment, the gravy comprises methylcellulose in an amount from about 0.1 weight % to about 4.0 weight %. In another embodiment, the gravy comprises methylcellulose in an amount from about 0.1 weight % to about 3.0 weight %. In another embodiment, the gravy comprises methylcellulose in an amount from about 0.1 weight % to about 2.0 weight %. In another embodiment, the gravy comprises methylcellulose in an amount from about 1.0 weight % to about 2.0 weight %. In one embodiment, the gravy comprises methylcellulose in an amount of about 1.0 weight %. In one embodiment, the gravy comprises methylcellulose in an amount of about 1.25 weight % by weight. In another, embodiment the gravy comprises methylcellulose in an amount of about 1.4 weight %.

In some embodiments of the method, the gravy comprising methylcellulose is prepared at a first temperature from about 10°C to about 26°C. In some embodiments, the gravy comprising methylcellulose is prepared at a first temperature lower than or about 26°C. In some embodiments, the temperature at which the gravy is prepared and the temperature at which the gravy is filled into the container to form the first layer is about the same temperature. For example, from about 10°C to about 26°C. In some embodiments, when the temperature of the gravy exceeds about 26°C during the preparing and/or the filling of the first layer, upon subsequent heating of the gravy to a second temperature, the jellification does not go to completion or the jellification does not occur to any extent.

In some embodiments of the method, the first layer comprising the gravy is from about 5 to about 20 % of the total weight of the pet food. In some embodiments, the first layer is from about 10 to about 14 % of the total weight of the pet food. In some embodiments, the first layer is from about 10 to about 13 % of the total weight of the pet food. In some embodiments, the first layer is from about 10 to about 12 % of the total weight of the pet food. In some embodiments, the first layer is about 10 %, about 11 %, about 12 %, about 13 %, about 14 %, about 15 % of the total weight of the pet food.

In some embodiments of the method, the container includes, but is not limited to, bags, boxes, pouches, cartons, jars, bottles, cans, or tubs. In some embodiments, the container can be made of materials including, but not limited to, plastic, metal, metal alloy, paper, polymer, glass or combinations thereof. In one embodiment, the container is a metal can. In one embodiment, the container is a plastic tub. The container can be any suitable shape, including, but not limited to, a cube, a cylinder, circular, oval, square, or rectangular. The container can be symmetrical or asymmetrical.

In some embodiments of the method, the heating can occur in the same location as the filling. For example, the filling can occur at a location and the heating can be performed at the same location as the filling without the need for transporting the container to a second location for heating. In some embodiments, the method further comprises transporting the container from a filling location into a heating zone comprising a heat source after the filling of the first layer and prior to the heating.

The heating of the container comprising the gravy can increase the temperature of the gravy by about 20°C to about 44°C, for example from a first temperature of about 10°C to about 26°C to a second temperature of about 30°C to about 70°C. In some embodiments, the temperature of the gravy during heating is not uniform throughout the gravy. For example, a temperature gradient can exist in the gravy during the heating. In some embodiments, a lower portion of the gravy (e.g. the portion closest to the heat source) can have a temperature from about 60°C to about 70°C and an upper portion of the gravy can have temperature from about 40°C to about 50°C.

In one embodiment of the method, the heating of the gravy can be accomplished with any heat source used in the food industry including but not limited to microwaves, steam, hot air, hot water bath, hot plate or infrared radiation. It is appreciated that the heat source employed is generally compatible with the material that the container is constructed from. As a non-limiting example, infrared heating can be used to heat 5 g to 20 g of gravy in the container from about 20°C to about 70°C in about 10 seconds to about 80 seconds. In another non-limiting example, the infrared heating can be used to heat about 7 g of gravy in the container from about 20°C to about 65°C in about 75 seconds. In an embodiment, the gravy in the container does not undergo a cooling step before the second edible composition is added.

In one embodiment, the container is not significantly damaged during the heating. For example, the container is not melted, deformed, and/or the integrity of the container is not otherwise compromised. For example, when microwave energy is used for the heating the container is preferably plastic.

In one embodiment, the method comprises a heat source that is an infrared heat source. In some embodiments, the heat source is configured below the container comprising the gravy. In some embodiments, the heat source is configured in a heating zone, below the container comprising the gravy, wherein the heating zone is separate and downstream from the location of the filling of the first layer comprising gravy. In some embodiments, the heat source is an infrared heat source including, but not limited to, heat lamps, quartz lamps, quartz tubes, metal sheath elements, ceramic elements, glass or metal panels. In one embodiment, the heat source is an infrared lamp.

In some embodiments of the method, the heat source comprises a plurality of infrared lamps. In some embodiments, the heat source comprises two infrared lamps, three infrared lamps, four infrared lamps, five infrared lamps, or six infrared lamps. In some embodiments, the heat source comprises up to seventy-two infrared lamps.

In some embodiments, the total power provided by the heat source is from about 180 kW to about 200 kW. In one embodiment, the total power provided by the heat source is about 198 kW. For example, in one embodiment, a plurality of infrared lamps each provide about 2kW, about 3 kW or about 5 kW of power.

In some embodiments of the method, the heat source is part of a heating unit comprising additional components. For example, in some embodiments, the infrared lamp may be part of a heating unit that includes an enclosure enclosing the infrared lamp to protect and support cleaning operations of the infrared lamp. In some embodiments, heating unit further comprises a high temperature resistant glass on the top of the heating unit (e.g. NEXTREMA GLASS available from SCHOTT). The high temperature resistant glass typically has a transmission profile that is compatible with the heat source. For example, the glass can be optimized for transmission in the infrared range when the heat source is an infrared heat source. In some embodiments, the heating unit further comprises a cooling unit to cool the heat source. For example, the heating unit can comprise fans or other sources of air flow to cool the infrared lamps.

In some embodiments of the method, the heating zone further comprises a heating unit comprising a heat source. In some embodiments, the heating zone comprises a plurality of heating units. For example, the heating zone comprises a plurality of heating units comprising the heat source. In some embodiments, the heating zone comprises one heating unit, two heating units, three heating units, four heating units, five heating, or six heating units. In some embodiments, each heating unit comprises multiple heat sources (e.g. each heating unit can comprise 2, 4, 6, 8, 10 or 12 infrared lamps). The heating zone comprising the heating units can be configured in any one of a plurality of configurations. For example, the heating zone can comprise three heating units configured end to end (e.g. with a dimension of one heating unit by 3 heating units). In another exemplary embodiment, the heating zone comprises six heating units with a dimension of two heating units by three heating units.

In some embodiments of the method, the container can be conveyed horizontally through the heating zone and above the heating unit. In some embodiments, the speed at which the container is conveyed horizontally through the heating zone defines a residence time of the container in the heating zone. In some embodiments, the residence time of the container in the heating zone depends upon the power setting of the heat source and the throughput of the system as defined by cycles/unit time (e.g. determined by the speed of the containers through the heating zone). In one embodiment, the residence time of a container comprising gravy in the heating zone is from about 2 minutes to about 3 minutes. In one embodiment, the residence time of a container comprising gravy in the heating zone is about 2 minutes 5 seconds, 2 minutes 10 seconds, about 2 minutes 15 seconds, about 2 minutes 20 seconds, about 2 minutes 25 seconds, about 2 minutes 30 seconds about 2 minutes 35 seconds, about 2 minutes 40 seconds, about 2 minutes 45 seconds, about 2 minutes 50 seconds, about 2 minutes 55 seconds.

The throughput can be determined by processing time and by the numbers of rows of containers and the number of containers in within each row. In some embodiments, the throughput can be 200-300 containers/min. In some embodiments, the throughput can be 225-275 containers/min. In one embodiment, the throughput can be 250 containers/min. For example, the method can comprise 10 rows of containers wherein each row has 25 containers, a throughput of 250 containers/minute. In one embodiment, 10 filled and sealed containers exit the system every 2 seconds.

In addition to a heating zone comprising a heating unit comprising a heat source, the method can further comprise a cooling unit configured to cool an upper section of the container (e.g. a section that does not contain or that is not in contact with the gravy, jelly or meat emulsion). The cooling unit can be ducted air directed towards the upper section of the container. The cooling unit can provide the ducted air directed towards the upper section of the container at the same time that the heat source is heating the container comprising the gravy from below. In some embodiments, the upper section of the container that does not contain or that is not in contact with the gravy, jelly or meat emulsion does not exceed a temperature of about 90°C or about 95°C during the heating in the heating zone.

In some embodiments of the method, once the heating is completed (e.g. the gravy is heated to a second temperature and has become a jelly), the container can be conveyed further downstream to a non-heating zone where the second layer comprising a second edible composition is dispensed into the container and on top of the jelly. In some embodiments, the second edible composition is pre-cooked to a temperature from about 40°C to about 70°C prior to the filling of the second layer. In some embodiments, the second edible composition has a temperature from about 40°C to about 70°C during the filling of the second layer.

In one embodiment of the method, the gravy can further comprise a hydrocolloid such as galactomannan. In some embodiments, the galactomannan is selected from the group consisting of fenugreek gum, guar gum, tara gum, locust bean gum and cassia gum. In one embodiment, the galactomannan is guar gum. In some embodiments, the gravy comprises guar gum in an amount from about 0.1 weight % to about 5.0 weight %. In one embodiment, the gravy comprises guar gum in an amount from about 0.1 weight % to about 4.0 weight %. In another embodiment, the gravy comprises guar gum in an amount from about 0.1 weight % to about 3.0 weight %. In another embodiment, the gravy comprises guar gum in an amount from about 0.1 weight % to about 2.5 weight %. In another embodiment, the gravy comprises guar gum in an amount from about 1.0 weight % to about 2.0 weight %. In another embodiment, the gravy comprises guar gum in an amount from about 0.8 weight % to about 1.4 weight %. In one embodiment, the gravy comprises guar gum in an amount of about 0.8 weight %, about 1.0 weight %, about 1.4 weight %, or about 1.7 weight %.

In some embodiments, the second temperature is from about 30°C to about 70°C. In another embodiment, the second temperature is from about 60°C to about 70°C. In one embodiment, the second temperature is from about 60°C to about 65°C.

In some embodiments, the combination of methylcellulose and galactomannan, e.g. guar gum, enables the onset and/or completion of the jellification of the gravy at a lower second temperature. For example, the combination of methylcellulose and guar provides an onset of jellification from about 55°C to about 65°C. In other embodiments, the combination of methylcellulose and guar provides an onset of jellification of about 55°C, about 60°C or about 65°C. In some embodiments, the combination of methylcellulose and galactomannan, e.g. guar gum provides completion of jellification at a lower temperature. In some embodiments, with the combination of methylcellulose and guar the jellification is substantially complete at about 65°C, about 70°C or about 75°C.

In an embodiment, the gravy can further comprise an additional component. In some embodiments the additional component, enables the onset and/or completion of the jellification of the gravy at a lower temperature. In some embodiments, the additional component enables a temperature for onset and/or completion of jellification even lower than that achieved with the combination of methylcellulose and guar in the absence of the additional component. In some embodiments, the gravy can further comprise an additional component in an amount of less than or about 10.0 weight %. In some embodiments, the additional component can be selected from a salt, a sugar, an amino acid or combinations thereof. In one embodiment, the additional component is a salt. In some embodiments, the salt can be NaCl or trisodium diphosphate (TSDP) or combinations thereof. In some embodiments, the salt is present in an amount of less than or about 10 weight %. In some embodiments, the salt is present in an amount of less than or about 4.0 weight %. In some embodiments, the salt is present in an amount of less than or about 3.0 weight %. In some embodiments, the salt is present in an amount of less than or about 2.0 weight %. In another embodiment, the salt is present in an amount of less than or about 1.0 weight %. In some embodiments, the additional component is a sugar. In some embodiments, the sugar can be burnt sugar. In some embodiments, the sugar is present in an amount of less than or about 4.0 weight %, in some embodiments, the sugar is present in an amount of less than or about 3.0 weight %, in an amount of less than or about 2.0 weight %, or in an amount of less than or about 1.0 weight %. In some embodiments, the additional component is an amino acid. In some embodiments, the amino acid is present in an amount of less than or about 4.0 weight %, in some embodiments, the amino acid is present in an amount of less than or about 3.0 weight %, in an amount of less than or about 2.0 weight %, or in an amount of less than or about 1.0 weight %.

In some embodiments, the method can further comprise sealing the container comprising the gravy and the second edible composition and then retorting the sealed container. For example, the sealed container can be retorted by subjecting the sealed container to heat treatment at a temperature from about 121°C to about 128°C for about 10 to about 60 minutes. The retorted container can be cooled, for example to ambient temperature. In some embodiments, the temperature to which the retorted container is cooled can be a function of the water temperature supplied to the cooling operation. For example, in one embodiment the retorted container can be cooled to a temperature of about 35°C.

The present disclosure describes the multi-layered pet food made by this method. Yet another aspect of the present disclosure is method of providing nutrition to a pet, such as a companion animal, by administering the multi-layered pet food disclosed herein. The multi-layered pet food can be formulated for a pet such as a companion animal, for example according to the standards of The Association of American Feed Control Officials (AAFCO).

The order of filling the gravy and the second edible composition in the container ensures that the gravy rests on and/or covers the upper surface of the second edible composition when the container is opened and the pet food is removed from the container by flipping the container over so that the opening faces downward towards a serving apparatus.

In various embodiments, the weight ratio of the gravy to the second edible composition can be about 10:90 to about 50:50, from about 12:88 to about 45:55, or from about 20:80 to about 40:60. The methylcellulose can be substantially the only hydrocolloid in the gravy (i.e., the hydrocolloids in the gravy can consist essentially of or consist of the methylcellulose); and when guar gum is included in the gravy, the methylcellulose and the guar gum can be substantially the only hydrocolloid in the gravy (i.e., the hydrocolloids in the gravy can consist essentially of or consist of the methylcellulose and the guar gum).

In some embodiments, the first layer comprising the first edible composition that is gravy and the second layer comprising the second edible composition are discrete layers. In some embodiments, a flat upper surface of the second edible composition abuts the gravy in the container. The term "upper" or "top" means the highest point of elevation of the second edible composition when the second edible composition is removed from a container and placed on a serving apparatus, i.e., the upper surface of the second edible composition is the surface of the second edible composition most distant from the opening of the container. As used herein, a surface is "flat" if at least about 70% of the surface is coplanar; at least about 80% of the surface is coplanar, at least about 90% of the surface is coplanar, or about 100% of the surface is coplanar. For example, if the container is a cylindrical can, the flat upper surface of the second edible composition can be substantially parallel to the opening of the container.

Non-limiting examples of suitable containers include metal cans (e.g., 3 oz. 85 g cans), plastic trays, tubs, seamed containers (e.g., a seamed can in which a can end is interlocked with a can body), flexible pouches, glass jars, or retortable rigid plastic containers. The present disclosure is not limited to a specific embodiment of the container, and the container is any container that can receive the gravy and second edible composition and then withstand retorting conditions. For containers seamed by a rotating seamer, the gravy can jellify during seaming and advantageously maintain the flat surface of the second edible composition by which the second edible composition abuts against the gravy in the container.

The gravy can contain edible ingredients in addition to the methylcellulose, for example, one or more flavors such as chicken flavor, beef flavor, fish flavor, vegetable flavor, or burnt sugar; one or more colorants; one or more visible nutrition ingredients such as spinach, carrots, or cranberries; and/or one or more condiments such as parsley or oregano. The additional edible ingredients can be added to the gravy before, during or after the addition of the methylcellulose.

In an embodiment, the second edible composition is a loaf-type product, such as a mousse or meat emulsion. A mousse is an aerated food product that can be sweet or savory and can be stabilized with gelatin or agar. A sweet mousse can be made with whipped egg whites or whipped cream and can be flavored with puréed fruits or an herb or spice, such as mint or vanilla. A savory mousse can be made from meat, fish, shellfish, cheese or vegetable. In some embodiments, second edible composition, e.g. the loaf-type product, mousse or meat emulsion, further comprises a hydrocolloid. For example, the second edible composition can comprise a locust bean gum. In some embodiments, the hydrocolloid from the second edible composition may be released to some degree into the first edible composition during retorting.

As used herein, a loaf-type product is a pet food having a structure that is maintained, during and after removal from the container at ambient temperature and ambient pressure, the shape is imparted on the loaf-type product by the container. For example, a loaf-type product removed from a cylindrical can will have a cylindrical shape having a horizontal cross-section with substantially the same dimensions as a corresponding horizontal cross-section of the interior of the can. In one embodiment, the second edible composition in the pet food disclosed herein is a loaf-type pet food and has no free gravy after removal from the container, i.e., at least a portion of the gravy is positioned on the top surface of the loaf-type pet food and the remainder of the gravy, if any, is positioned on the lateral sides of the loaf-type pet food, not the serving apparatus. In one embodiment, the gravy is positioned only on the top surface of the loaf-type pet food after removal from the container. In some embodiments, the gravy is positioned only on the top surface of the loaf-type pet food immediately after removal from the container and for a period of time, and then the gravy cascades at least partially down one or more sides of the loaf-type pet food.

The present disclosure provides a system (e.g. a continuous production line) capable of producing the container comprising the multi-layered pet food comprising the gravy and the second edible composition. In one embodiment, the system comprises a loading station, a first filler configured to dispense a first layer comprising a first edible composition into the container, a heating unit comprising a heat source, a second filler configured for dispensing the second edible composition into the container and on top of the first layer, a weighing station for weighing the container comprising the first layer and the second layer. The filled container can then be sealed or closed by an appropriate lid setting device, such as a rotating seamer, and then conveyed to a steamer/retorting station. A conveyor belt can be used to transport the container from one station to another station of the continuous production line. In some embodiments, the system may further comprise a second weighing station positioned after the filling of the first layer and before the filling of the second layer. The second weighing station can be configured to record a weight of the container comprising the gravy prior to or after the heating.

In some embodiments, the system can comprise any heat source generally used in the food industry (e.g. pet food or human food) including but not limited to microwaves, steam, hot air, hot water bath, hot plate or infrared radiation. It is appreciated that the heat source employed is generally compatible with the material that the container is constructed from. In one embodiment, the container is not significantly damaged during the heating. For example, the container is not melted, deformed, and/or the integrity of the container is not otherwise compromised. For example, when microwave energy is used for the heating the container is preferably plastic.

As a non-limiting example, an infrared heat source can be used to heat 5 g to 20 g of gravy in the container from a first temperature of about 20°C to a second temperature of about 70°C in about 10 to about 180 seconds. In another non-limiting example, the infrared heat source can be used to heat about 5 g to about 20 g of the gravy in the container from a first temperature of about 20°C to a second temperature of about 70°C in about 60 to about 180 seconds. In another non-limiting example, the infrared heat source can be used to heat about 7 g of gravy in the container from a first temperature of about 20°C to a second temperature of about 65°C in about 120 seconds. In an embodiment, the gravy in the container does not undergo a cooling step before the second edible composition is added.

In one embodiment, the system comprises a heat source that is an infrared heat source. In some embodiments, the infrared heat source is configured below the container comprising the gravy. In some embodiments, the heat source is configured in a heating zone, below the container comprising the gravy, wherein the heating zone is separate and downstream from the location of the filling of the first layer comprising gravy. In some embodiments, the infrared heat source includes, but is not limited to, heat lamps, quartz lamps, quartz tubes, metal sheath elements, ceramic elements, glass or metal panels. In one embodiment, the heat source is an infrared lamp.

In some embodiments of the system, the heat source comprises a plurality of infrared lamps. In some embodiments, the heat source comprises two infrared lamps, three infrared lamps, four infrared lamps, five infrared lamps, six infrared lamps, seven infrared lamps, eight infrared lamps, nine infrared lamps, ten infrared lamps, eleven infrared lamps or twelve infrared lamps. In some embodiments, the heat source comprises up to seventy-two infrared lamps.

In some embodiments of the system, the heat source is a component of a heating unit. In some embodiments of the system, the heating unit comprising the heat source (e.g. an infrared heat source, for example an infrared lamp) comprises additional components. For example, in some embodiments, the heating unit can include an enclosure enclosing the heat source to protect and support cleaning operations of the heat source. In some embodiments, the heating unit further comprises a high temperature resistant glass (e.g. NEXTREMA GLASS available from SCHOTT). The high temperature resistant glass typically has a transmission profile that is compatible with the heat source. For example, the glass can be optimized for transmission in the infrared range when the heat source is an infrared heat source. In one exemplary embodiment, the heating unit comprises an infrared lamp and a high temperature resistant glass on top of the heating unit that is optimized for transmission in the infrared range. In some embodiments, the heating unit further comprises a cooling system to cool the heat source. The heating units can be configured in any one of a plurality of configurations. For example, the heating units can be configured end to end (e.g. with a dimension of one heating unit by three heating units). In another exemplary embodiment, the heating units can be configured with a dimension of two heating units by three heating units.

In some embodiments, the total power that can be provided by the heat source is about from about 180 to about 200 kW. In one embodiment, the total power that can be provided by the heat source is about 198 kW. For example, a plurality of infrared lamps can each provide about 2 kW, about 3 kW or about 5 kW of power.

In addition to a heating unit comprising a heat source, the system can further comprise a cooling unit configured to cool an upper section of the container (e.g. a section that does not contain or that is not in contact with the gravy, jelly or meat emulsion). The cooling unit can be ducted air directed towards the upper section of the container. The cooling unit can direct the ducted air towards the upper section of the container at the same time that the heating unit comprising the heat source is heating the container comprising the gravy from below. In some embodiments, the upper section of the container that does not contain or that is not in contact with the gravy, jelly or meat emulsion does not exceed a temperature of about 90°C or about 95°C during the heating in the heating zone.

In some embodiments, the system can further comprise a mechanical mixer for combining the ingredients of the gravy, i.e., at least methylcellulose and a liquid such as water, which can further comprise guar gum.

In some embodiments, the system can further comprise a component for sealing the container comprising the gravy and the second edible composition and then retorting the sealed container. For example, the sealed container can be retorted by subjecting the sealed container to heat treatment at a temperature from about 121°C to about 128°C for about 10 to about 60 minutes. The retorted container can be cooled, for example to ambient temperature. In some embodiments, the temperature to which the retorted container is cooled can be a function of the water temperature supplied to the cooling operation. For example, in one embodiment the retorted container can be cooled to a temperature of about 35°C.

### EXAMPLES

The following non-limiting examples are illustrative of embodiments provided by the present disclosure and advantages thereof.

### Example 1

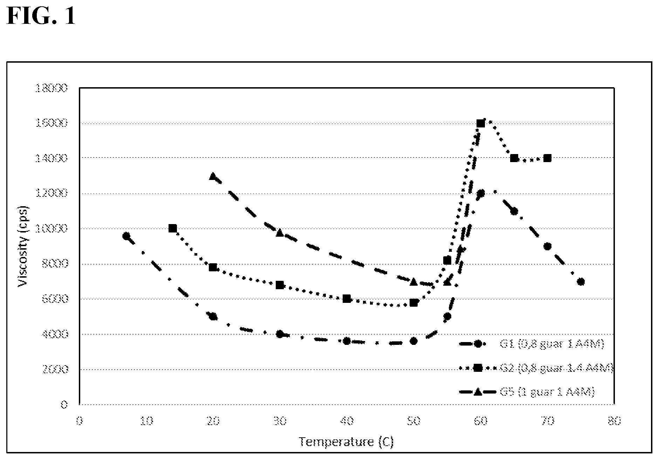

Viscosity analysis was performed on three different gravies having the same base formulation, including an aroma system, but containing different amounts of methylcellulose (Benecel A4M from Ashland) and guar gum. All gravies were prepared at an initial temperature from 20°C to 26°C. The first sample contained 1.0 % by weight methylcellulose and 0.8 % by weight guar gum. The second sample contained 1.4 % by weight methylcellulose and 0.8 % by weight guar gum. The third sample contained 1.0 % by weight methylcellulose and 1.0 % by weight guar gum. The graph in FIG 1. depicts the viscosity of the different gravies as a function of temperature and demonstrates the rapid jellification between 55°C and 60°C.

### Example 2

The jellification behavior of several gravies with and without methylcellulose and guar gum was tested using oscillatory measurement using a rheometer. The modulus was a 20 mm steel parallel plate with a gap of 1000 µm, in a high pressure cell to maintain the gravy moisture. The method parameters for heating were deformation 1% strain and frequency 1 Hz, ramp temperature: 25°C to 120°C at a rate of 2°C min. with 200 points. The method parameters for cooling were deformation 1% strain and frequency 1 Hz, ramp temperature: 120°C to 20°C at a rate of 5°C min. with 200 points. The parameters recorded were: G' Rigidity Modulus in Pascals, G" Viscous Modulus in Pascals, wherein Tan(delta)=G"/G'.

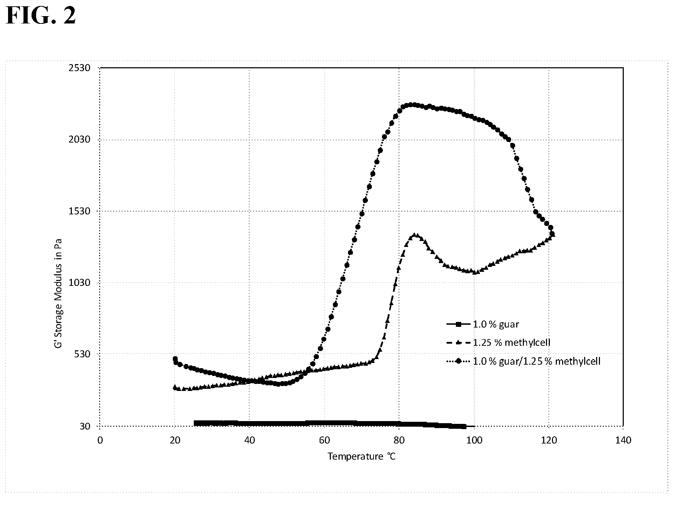

Three gravies with the same base formulation, but different amounts of methylcellulose and guar gum were tested using the parameters described above. The first sample contained 1.0 wt. % guar gum with no methylcellulose, the second sample contained 1.25 wt. % methylcellulose with no guar gum and the third sample contained of 1.0 wt. % guar with 1.25 wt. % methylcellulose. The compositions were analyzed in a complete rheogram (heating and cooling phase). FIG. 2 depicts the rheogram of G'rigidity modulus as a function of temperature during the heating phase for the different compositions. The composition containing the combination of methylcellulose and the guar gum shows rapid jellification between 60°C and 71°C; whereas the composition containing only methylcellulose shows jellification at a higher temperature and the composition containing only guar gum does not show any jellification.

### Example 3

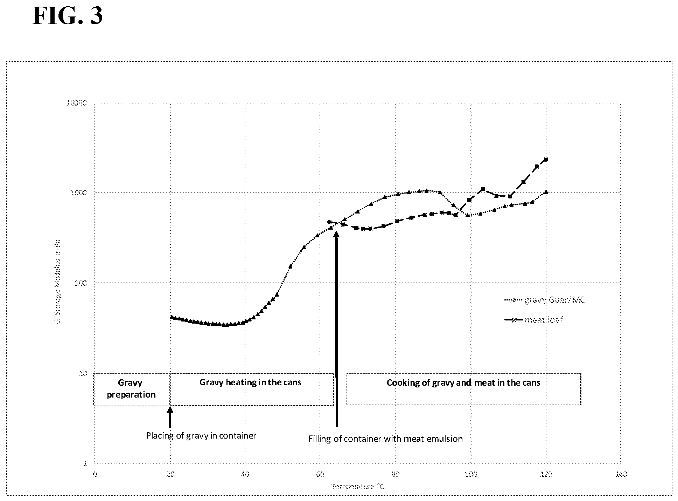

The G' storage modulus of a gravy composition containing 1.0 wt.% methylcellulose and 1.4 wt. % guar gum was compared to that of a meat emulsion during retorting. During the initial heating phase, the gravy starts to jellify at 60°C and the gel is formed up to 71°C. After this temperature, the gel is stable to 100°C. The meat emulsion is precooked at 60°C, ground and is then add on top of the jellified gravy. FIG. 3 shows that the G' storage modulus of the jelly and the meat are very closed so the jelly structure will not be impacted by the addition of meat emulsion and the jelly will thus keep its structure after retorting at 120°C.

### Example 4

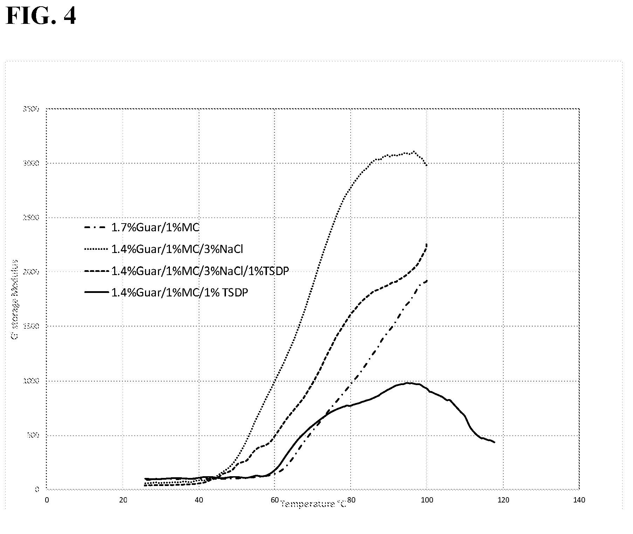

The behaviors of gravy compositions containing methylcellulose and guar gum with and without the further addition of a salt were investigated. The first sample contained 1.0 weight % methylcellulose and 1.7 weight % guar gum. The second sample contained 1.0 weight % methylcellulose, 1.4 weight % guar gum and 3.0 weight % NaCl. The third sample contained 1.0 weight % methylcellulose, 1.4 weight % guar gum, 3.0 weight % NaCl and 1.0 weight % trisodium diphosphate (TSDP). The fourth sample contained 1.0 weight % methylcellulose, 1.4 weight % guar gum, and 1.0 weight % TSDP. The onset of jellification occurs at a lower temperature for compositions containing salt in addition to the methylcellulose and guar gum as depicted in the rheogram in FIG. 4.

### Example 5

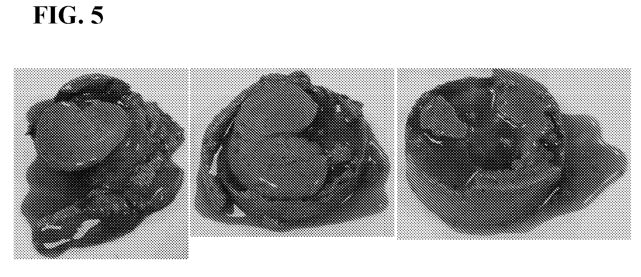

Trials were conducted to investigate the appearance of products containing gravy without methylcellulose along with a base layer of meat emulsion in 85 g aluminum cans. In each case, the gravy, at a temperature from 20°C to 26°C, was dispensed into a can a meat emulsion was layered on top of the gravy. The can was sealed and retorted at 120°C. The can was cooled, opened and inverted to release the product contained within. The products prepared in this way did not maintain the meat emulsion and gravy as distinct layers as seen in FIG. 5.

### Example 6

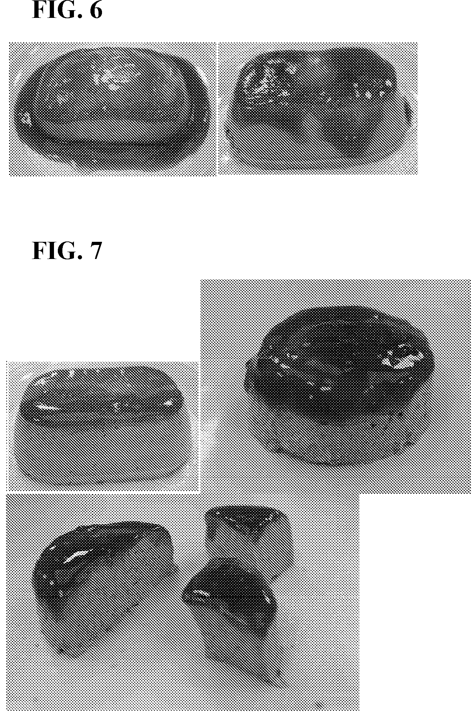

Additional trials were performed as describe in Example 5, but in another type of container (280 g plastic tubs). The meat emulsion had a slightly different recipe than in Example 5, but still did not contain methylcellulose. The meat emulsion did not maintain a substantially flat surface with the gravy on top after demoulding as seen in FIG. 6.

### Example 7

Additional trials were performed as described in Example 5, but with gravies containing 1.0 wt. % methylcellulose, 1.4 wt. % guar gum, and 1.0 weight % burnt sugar. In these cases, two distinct layers were maintained, the top of the base layer was very flat and the gravy remained on top of the base layer. The trial was successfully repeated using 280 g plastic tubs (left) and 85 g aluminum cans (middle, right) as shown in FIG 7.

It should be understood that various changes and modifications to the presently preferred embodiments described herein will be apparent to those skilled in the art. Such changes and modifications can be made without departing from the scope of the present subject matter and without diminishing its intended advantages. It is therefore intended that such changes and modifications be covered by the appended claims.

The Invention also relates to the embodiments according to claims 1 to 15.

## Claims

1. A system for preparing a multi-layered pet food comprising:
a container loading station;
a first filler for dispensing a first layer comprising a first edible composition into the container;
a heating unit comprising a heat source;
a second filler for dispensing a second layer comprising a second edible composition into the container and on top of the first layer;
lid setting station;
a weighing station for weighing the container comprising the first layer and the second layer.

2. The system of Claim 1, wherein the heat source is an infrared heat source.

3. The system of Claim 1, wherein the system is a continuous production line

4. The system of Claim 1, further comprising a steamer or retorting station.

5. The system of Claim 1, further comprising a second weighing station positioned after the filling of the first layer and before the filling of the second layer.

6. The system of claim 1, wherein the heating unit is configured to heat the first edible composition in the container from a first temperature of about 10°C to about 26°C to a second temperature of about 30°C to about 70°C, wherein the first edible composition is a gravy.

7. The system of Claim 2, wherein the infrared heat source is configured to heat 5 g to 20 g of the first edible composition in the container from a first temperature of about 20°C to a second temperature of about 70°C in about 10 to about 180 seconds, wherein the first edible composition is a gravy.

8. The system of Claim 2, wherein the infrared heat source is configured to heat 5 g to 20 g of the first edible composition in the container from a first temperature of about 20°C to a second temperature of about 70°C in about 60 to about 180 seconds, wherein the first edible composition is a gravy.

9. The system of Claim 2, wherein the infrared heat source is configured to heat about 7 g of the first edible composition in the container from a first temperature of about 20°C to a second temperature of about 65°C in about 120 seconds, wherein the first edible composition is a gravy.

10. The system of claim 1, wherein the heat source is configured in a heating zone below the container comprising the first edible composition, wherein the heating zone is separate and downstream from the location of the filling of the first layer, wherein the first edible composition is a gravy.

11. The system of claim 1, wherein the heating unit comprises an infrared lamp and a high temperature resistant glass on top of the heating unit that is optimized for transmission in the infrared range.

12. The system of claim 1, wherein the heating unit further comprises a cooling system to cool the heat source.

13. The system of claim 1, wherein the total power that can be provided by the heat source is about from about 180 to about 200 kW.

14. The system of claim 1, further comprising a cooling unit configured to cool an upper section of the container.

15. The system of claim 1, further comprising a mechanical mixer for combining the ingredients of the gravy.

## Patentansprüche

1. System zum Herstellen eines mehrschichtigen Haustierfutters, umfassend:
eine Behälterbeladungsstation;
eine erste Füllvorrichtung zum Abgeben einer ersten Schicht, umfassend eine erste essbare Zusammensetzung, in den Behälter;
eine Heizeinheit, umfassend eine Wärmequelle;
eine zweite Füllvorrichtung zum Abgeben einer zweiten Schicht, umfassend eine zweite essbare Zusammensetzung, in den Behälter und auf die erste Schicht;
Deckelaufsetzstation;
eine Wiegestation zum Wiegen des Behälters, umfassend die erste Schicht und die zweite Schicht.

2. System nach Anspruch 1, wobei die Wärmequelle eine Infrarot-Wärmequelle ist.

3. System nach Anspruch 1, wobei das System eine kontinuierliche Produktionslinie ist.

4. System nach Anspruch 1, ferner umfassend einen Dämpfer oder eine Retortenstation.

5. System nach Anspruch 1, ferner umfassend eine zweite Wiegestation, die nach dem Einfüllen der ersten Schicht und vor dem Einfüllen der zweiten Schicht angeordnet ist.

6. System nach Anspruch 1, wobei die Heizeinheit konfiguriert ist, um die erste essbare Zusammensetzung in dem Behälter von einer ersten Temperatur von etwa 10 °C bis etwa 26 °C auf eine zweite Temperatur von etwa 30 °C bis etwa 70 °C zu erhitzen, wobei die erste essbare Zusammensetzung eine Soße ist.

7. System nach Anspruch 2, wobei die Infrarot-Wärmequelle konfiguriert ist, um 5 g bis 20 g der ersten essbaren Zusammensetzung in dem Behälter in etwa 10 bis etwa 180 Sekunden von einer ersten Temperatur von etwa 20 °C auf eine zweite Temperatur von etwa 70 °C zu erhitzen, wobei die erste essbare Zusammensetzung eine Soße ist.

8. System nach Anspruch 2, wobei die Infrarot-Wärmequelle konfiguriert ist, um 5 g bis 20 g der ersten essbaren Zusammensetzung in dem Behälter in etwa 60 bis etwa 180 Sekunden von einer ersten Temperatur von etwa 20 °C auf eine zweite Temperatur von etwa 70 °C zu erhitzen, wobei die erste essbare Zusammensetzung eine Soße ist.

9. System nach Anspruch 2, wobei die Infrarot-Wärmequelle konfiguriert ist, um etwa 7 g der ersten essbaren Zusammensetzung in dem Behälter in etwa 120 Sekunden von einer ersten Temperatur von etwa 20 °C auf eine zweite Temperatur von etwa 65 °C zu erhitzen, wobei die erste essbare Zusammensetzung eine Soße ist.

10. System nach Anspruch 1, wobei die Wärmequelle in einer Heizzone unterhalb des Behälters, umfassend die erste essbare Zusammensetzung, konfiguriert ist, wobei die Heizzone getrennt und stromabwärts von dem Ort des Einfüllens der ersten Schicht ist, wobei die erste essbare Zusammensetzung eine Soße ist.

11. System nach Anspruch 1, wobei die Heizeinheit eine Infrarotlampe und ein hochtemperaturbeständiges Glas auf der Oberseite der Heizeinheit umfasst, das für die Übertragung im Infrarotbereich optimiert ist.

12. System nach Anspruch 1, wobei die Heizeinheit ferner ein Kühlsystem umfasst, um die Wärmequelle zu kühlen.

13. System nach Anspruch 1, wobei die Gesamtleistung, die von der Wärmequelle bereitgestellt werden kann, etwa von etwa 180 bis etwa 200 kW beträgt.

14. System nach Anspruch 1, ferner umfassend eine Kühleinheit, die konfiguriert ist, um einen oberen Abschnitt des Behälters zu kühlen.

15. System nach Anspruch 1, ferner umfassend einen mechanischen Mischer zum Vermischen der Inhaltsstoffe der Soße.

## Revendications

1. Procédé de préparation d'un aliment multicouche pour animaux de compagnie comprenant :
une station de chargement de récipient ;
un premier dispositif de remplissage pour distribuer une première couche comprenant une première composition comestible dans le récipient ;
une unité de chauffage comprenant une source de chaleur ;
un second dispositif de remplissage pour distribuer une seconde couche comprenant une seconde composition comestible dans le récipient et sur le dessus de la première couche ;
une station de pose de couvercle ;
une station de pesage pour peser le récipient comprenant la première couche et la seconde couche.

2. Système selon la revendication 1, dans lequel la source de chaleur est une source de chaleur infrarouge.

3. Système selon la revendication 1, dans lequel le système est une ligne de production continue

4. Système selon la revendication 1, comprenant en outre une station de cuisson à la vapeur ou d'autoclavage.

5. Système selon la revendication 1, comprenant en outre une seconde station de pesage positionnée après le remplissage de la première couche et avant le remplissage de la seconde couche.

6. Système selon la revendication 1, dans lequel l'unité de chauffage est conçue pour chauffer la première composition comestible dans le récipient d'une première température d'environ 10 °C à environ 26 °C jusqu'à une seconde température d'environ 30 °C à environ 70 °C, dans lequel la première composition comestible est une sauce.

7. Système selon la revendication 2, dans lequel la source de chaleur infrarouge est conçue pour chauffer 5 g à 20 g de la première composition comestible dans le récipient d'une première température d'environ 20 °C jusqu'à une seconde température d'environ 70 °C en environ 10 à environ 180 secondes, dans lequel la première composition comestible est une sauce.

8. Système selon la revendication 2, dans lequel la source de chaleur infrarouge est conçue pour chauffer 5 g à 20 g de la première composition comestible dans le récipient d'une première température d'environ 20 °C jusqu'à une seconde température d'environ 70 °C en environ 60 à environ 180 secondes, dans lequel la première composition comestible est une sauce.

9. Système selon la revendication 2, dans lequel la source de chaleur infrarouge est conçue pour chauffer environ 7 g de la première composition comestible dans le récipient d'une première température d'environ 20 °C jusqu'à une seconde température d'environ 65 °C en environ 120 secondes, dans lequel la première composition comestible est une sauce.

10. Système selon la revendication 1, dans lequel la source de chaleur est conçue dans une zone de chauffage sous le récipient comprenant la première composition comestible, dans lequel la zone de chauffage est séparée et en aval de l'emplacement du remplissage de la première couche, dans lequel la première composition comestible est une sauce.

11. Système selon la revendication 1, dans lequel l'unité de chauffage comprend une lampe infrarouge et un verre résistant aux hautes températures sur le dessus de l'unité de chauffage qui est optimisé pour la transmission dans la gamme infrarouge.

12. Système selon la revendication 1, dans lequel l'unité de chauffage comprend en outre un système de refroidissement pour refroidir la source de chaleur.

13. Système selon la revendication 1, dans lequel la puissance totale pouvant être fournie par la source de chaleur est d'environ 180 à environ 200 kW.

14. Système selon la revendication 1, comprenant en outre une unité de refroidissement conçue pour refroidir une section supérieure du récipient.

15. Système selon la revendication 1, comprenant en outre un mélangeur mécanique pour combiner les ingrédients de la sauce.
